# EUROPEAN PATENT APPLICATION

(11) **EP 0 783 990 A1**
(43) Date of publication of application: **16.07.1997**
(21) Application number: 96308218.5
(22) Date of filing: 14.11.1996
(51) Int. Cl.: B60N 2/44, F16B 9/02

(54) **Connecting system**

(30) Priority: 12.01.1996 GB 9600606
(71) Applicant: Dunlop Cox Limited, Nottingham NG8 4GP (GB)
(72) Inventor: Christopher Hugh Charles, West Bridgford, Nottingham NG2 6JR (GB)
(74) Representative: Treves, Barry William

(57) **Abstract**

A member (1) e.g. a rod or a tube, is secured to a sheet (5) e.g. a side of a vehicle seat frame by forming a hole in the sheet (5) and placing the member (1) in the hole. The member (1) has a portion (2) which fits in the hole and projects through the sheet (5), a shoulder (4 or 14) on the member (1) engaging a displaced region (6 or 16) of the sheet (5) surrounding the hole. A cup (7) is secured to the portion (2) e.g. by means of a screw (9), in a position covering the end of the portion (2) and engaging the region (6 or 16) around the hole, the region (6 or 16) being sandwiched between the cup (7) and the shoulder (4 or 14).

## Description

This invention relates to a method of securing a member e.g. to a sheet. In particular the invention relates to the fitting of a rod or tube to a frame member of sheet material.

When manufacturing a product such as the base frame of a vehicle seat, said frame comprising two sides of sheet steel and one or two cross tubes, also of steel, it is found that a degree of adjustment is required when the frame is fitted to mounting brackets on the vehicle floor.

It is an object of the present invention to provide a method of securing a member which allows such adjustment to be made.

In accordance with the invention a method of securing a member to a sheet comprises forming a hole in the sheet, forming the sheet adjacent the hole to form a displaced circular region surrounding the hole, forming the end of the member to form a portion, which fits in the hole, and a shoulder of larger cross-sectional width, said shoulder having a shape complementary to that of the region, placing the portion inside the hole so the portion projects through the sheet and the shoulder engages the displaced region, covering the end of the portion with a cup having an edge which engages the displaced region and securing the cup to the portion to sandwich the region between the edge and the shoulder.

In one form of the invention the member is a rod or tube, each of circular cross-section and the portion has a smaller outside diameter compared to the remainder of the rod or tube.

The cup may be secured to the member e.g. the rod or tube by forming a screw-threaded bore, forming a hole in the cup and securing the cup to the member by means of a bolt. The axis of the bolt may be coaxial with that of the rod or tube and generally at right angles to the plane of the sheet.

The displaced region surrounding the hole, the shoulder of the member and the edge of the cup may all be conical in form so that when fitted together the displaced region nests between the edge of the cup and the shoulder.

Alternatively the said displaced region, the shoulder and the edge are part spherical and when fitted together the displaced region nests between the edge of the cup and the shoulder.

In accordance with another aspect of the invention a product comprises a sheet, a member and a cup, the sheet having a hole and a deformed region surrounding the hole, the member having a portion projecting through the hole and a shoulder abutting the region on one side thereof, and the cup fixed to the portion projecting through the hole, with an edge thereof abutting the region on the other side of the sheet, the fixing of the cup securing the region between the edge and the shoulder.

The shoulder, edge and region may all be conical or all part spherical, the region nesting between the edge and the shoulder.

In one example of the invention a product comprises a base frame for a vehicle seat, the sheet comprises a part of a side of the frame and the member comprises a cross-tube. The base frame may comprise two sides, one parallel to the other, and the member has two portions, one of which projects through a hole in one side and the other of which projects through a further hole in the other side.

The cup is preferably fixed to the portion by means of a bolt and the bolt may also secure a seat belt anchorage to the seat frame.

Two embodiments of the invention will now be described by way of example only with reference to the accompanying drawings of which:-
- Figure 1: shows a partial cross-section through part of a member being a cross tube for a seat frame, secured to a sheet, being part of a side of the seat frame, according to the first embodiment;
- Figure 2: shows diagrammatically how adjustment may be made to the seat frame; and
- Figure 3: shows a partial cross-section through part of a member being a cross tube for a seat frame, secured to a sheet, being part of the side of a seat frame, according to the second embodiment.

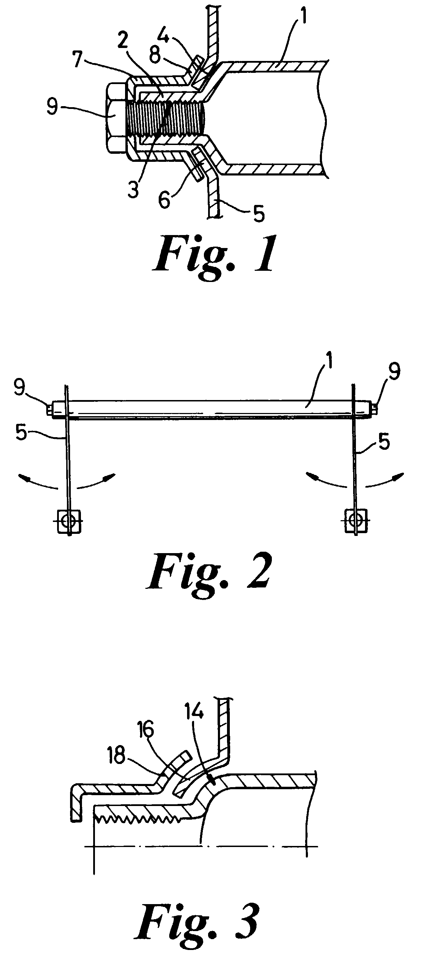

As shown in Figure 1 a steel cross tube 1 for a vehicle seat frame is formed with an end portion 2 reduced in diameter by a swaging operation. The portion is also formed internally with a screw-thread 3. A conical shoulder 4 is formed at the junction of the portion 2 and the remainder of the tube 1.

The side 5 of the seat frame is formed of sheet steel with a hole and a displaced region 6 surrounding the hole. The region 6 is conical in shape and complementary to the shape of the shoulder 4. The end portion 2 is inserted into the hole so that shoulder abuts the inner side of the displaced region 6 and the portion 2 projects through the hole and out through the outer side of the side 5 of the seat frame.

A cup 7 is formed from sheet material e.g. by extruding and swaging to fit over the protruding part of the end portion 2 and also to have an edge 8 also of conical form, which abuts the displaced region 6 on the outer side of the side 5 of the frame. The cup 7 is also formed with a hole and a bolt 9 is passed through the hole to engage the screw thread 3 formed internally of the end portion 2.

The seat frame which comprises two sides and two cross tubes is assembled, but the bolts are not tightened immediately. The sides are fixed to mounting brackets on the vehicle floor and once in position the bolts are tightened. The high bolt torque gives very high clamping load to lock all parts together, in particular securing the cross-tube to the two sides.

As shown in Figure 3, in the method of the second embodiment the shoulder 14, edge 18 and region 16 are all formed to be part spherical instead of conical as for the first embodiment as shown in Figure 1.

When the bolts 9 are tightened the conical and in particular the spherical shape, the shoulder region and edge allow adjustment in the overall shape of the seat frame, so it fits securely to the mounting brackets on the vehicle floor, even though the brackets may not be accurately positioned due to manufacturing tolerances.

The bolt used to secure the cross tube to the frame side may also be used to secure the seat belt anchorage.

## Claims

1. A method of securing a member (1) to a sheet (5) characterised by comprising forming a hole in the sheet (5), forming the sheet (5) adjacent the hole to form a displaced circular region (6 or 16) surrounding the hole, forming the end of the member (1) to form a portion (2) which fits in the hole, and a shoulder (4 or 14) of larger cross-sectional width, said shoulder (4 or 14) having a shape complementary to that of the region (6 or 16), placing the portion (2) inside the hole so that the portion (2) projects through the sheet (5) and the shoulder (4 or 14) engages the displaced region (6 or 16), covering the end of the portion (2) with a cup (7) having an edge (8 or 18) which engages the displaced region (6 or 16) and securing the cup (7) to the portion (2) to sandwich the region (6 or 16) between the edge (8 or 18) and the shoulder (4 or 14).

2. A method according to Claim 1 characterised in that the member (1) comprises a rod or tube each of circular cross-section and the portion (2) has a smaller outside diameter compared to the remainder of the rod or tube.

3. A method according to Claim 1 or Claim 2 characterised by securing the member (1) by forming a screw-threaded bore (3), forming a hole in the cup (7) and securing the cup (7) to the member (1) by means of a bolt (9).

4. A method according to Claim 3 characterised in that the axis of the bolt (9) is co-axial with that of the member (1) and generally at right-angles to the plane of the sheet (5).

5. A method according to any one of the preceding Claims characterised in that the displaced region (6) surrounding the hole, the shoulder 4) of the member (1) and the edge (8) of the cup (7) are all conical in form and the method comprises the step of fitting the region (6), shoulder (4) and edge (8) together with the displaced region (6) nesting between the edge (8) of the cup (7) and the shoulder (4).

6. A method according to any one of Claims 1-4 characterised in that the displaced region (16), the shoulder (14) and the edge (18) are spherical and the method includes the step of fitting the region (16), shoulder (14) and edge (18) together with the displaced region (16) nesting between the edge (18) of the cup (7) and the shoulder (14).

7. A product comprising a sheet (5), a member (1) and a cup (7), the sheet (5) having a hole and a deformed region (6 or 16) surrounding the hole, the member (1) having a portion (2) projecting through the hole and a shoulder (4 or 14) abutting the region (6 or 16) on one side thereof, and the cup (7) fixed to the portion (2) projecting through the hole, with an edge (8 or 18) thereof abutting the region (6 or 16) on the other side of the sheet (5), the fixing of the cup (7) securing the region (6 or 16) between the edge (8 or 18) and the shoulder (4 or 14).

8. A product according to Claim 7 characterised in that the shoulder (4), edge (8) and region (6) are all conical and the region (6) nests between the edge (8) and the shoulder (4).

9. A product according to Claim 7 characterised in that the shoulder (14), edge (18) and region (16) are all part-spherical, the region (16) nesting between the edge (18) and the shoulder (14).

10. A product according to any one of Claims 7,8 or 9 characterised by comprising a base frame for a vehicle seat, wherein the sheet (5) comprises a part of a side of the frame and the member (1) comprises a cross tube.

11. A product according to Claim 10 characterised in that the base frame comprises two sides (5), one parallel to the other, and the member (1) has two portions (2), one of which projects through a hole in one side (5) and the other of which projects through a further hole in the other side (5).

12. A product according to any one of Claims 7-11 characterised in that the cup (7) is fixed to the portion (2) by means of a bolt (9).

13. A product according to Claim 12 when dependent on Claim 10 or Claim 11 characterised in that the bolt (9) secures a seat belt anchorage to the seat frame.
